# EUROPEAN PATENT APPLICATION

(11) **EP 2 067 654 A1**
(43) Date of publication of application: **10.06.2009**
(21) Application number: 07828281.1
(22) Date of filing: 20.09.2007
(51) Int. Cl.: B60N 2/48, B60N 2/42, B60R 11/04, B60R 21/00, B60R 21/01, B60R 21/055

(54) **HEAD REST ADJUSTING DEVICE AND METHOD**

(30) Priority: 29.09.2006 JP 2006266794
(71) Applicant: Aisin Seiki Kabushiki Kaisha, Kariya-shi, Aichi 448-8650 (JP)
(72) Inventor: KASUGAI, Junya, Kariya-shi, Aichi 448-8650 (JP); HIROTA, Koichi, Kariya-shi, Aichi 448-8650 (JP); KONNO, Kazushi, Kariya-shi, Aichi 448-8650 (JP); AIYAMA, Takaya, Kariya-shi, Aichi 448-8650 (JP)
(74) Representative: TBK-Patent
(86) International application number: PCT/JP2007/068286
(87) International publication number: WO 2008/041494

(57) **Abstract**

A face image obtained by imaging a vehicle occupant by a CCD camera (10) is recorded in an image memory (140). A CPU (170) detects the position and the direction of a face of the occupant according to the face image recorded in the recording memory (140). The CPU (170) is triggered by an input from an obstacle detection sensor (60) to calculate a displacement amount and a rotation amount of a headrest (200) according to the face and the direction of the face of the occupant against the headrest (200) and the direction and the speed of the obstacle against the vehicle and adjust the position and angle of the headrest (200) by driving a motor (211).

## Description

### TECHNICAL FIELD

The present invention relates to a headrest adjusting device and a method of the same which adjusts a position and an angle of a headrest.

### BACKGROUND ART

A technology for adjusting a position of a seat and for detecting a three dimensional position of an occupant in order to adjust the position of the seat for protection against a collision of a vehicle is disclosed in Patent Document 1 as a device, for example, for adjusting the position of the seat of the vehicle. A method and a device for detecting a three dimensional position of an occupant of an automobile are disclosed in Patent Document 2. Patent Document 1: JP2006-513895A
Patent Document 2: JP2006-510076A

### DISCLOSURE OF INVENTION

### [Objects to be solved by the invention]

A device for adjusting a shape of a seat for a vehicle according to Patent Document 1 changes the shape of the seat by using a signal of a contactless measurement sensotronic, the contactless measurement sensotronic reliably acquires and detects a posture of an occupant. However, it is more effective to adjust a position of a headrest than to change the shape of the seat to reduce an impact that a head portion of the occupant receives at the time of a collision. In this respect, a known active headrest is not always positioned so as to protect the head portion of the occupant at the time of the collision. Consequently, there are variations in a reducing effect of the impact that the head portion of the occupant receives at the time of the collision.

A device for detecting a three dimensional position of a head portion of an occupant according to Patent Document 2 extracts characteristics of the head portion of the occupant from video data and starts tracking by using a head model. The device detects, by way of a pattern recognition, the extracted characteristics of the head portion of the occupant, and then tracks the characteristics of the extracted head portion of the occupant by using the head model. However, the method has problems in terms of an installation location of a camera or in terms of cost.

The present invention is made considering the problems described above and an object of the present invention is to provide a headrest adjusting device and a method of the same by which a headrest effectively absorbs the impact of the collision.

### [Means to solve an object]

To achieve the above-mentioned object, according to a first viewpoint of the present invention, a headrest adjusting device (800) includes a face position detection means detecting a position of a face of an occupant (70) of a vehicle (1000), and a headrest control means driving a headrest (200) provided on an upper portion of a seat (300) for the vehicle (1000) and controlling a position of the headrest (200) based on the position of the face detected by the face position detection means.

The headrest adjusting device (800) further includes a face direction detection means detecting a direction of the face of the occupant (70) of the vehicle, and the headrest control means may control a position and an angle of the headrest (200) based on the position of the face detected by the face position detection means and based on the direction of the face detected by the face direction detection means.

The face position detection means is provided on the vehicle (1000) and may detect the position of the face based on an image taken by an image taking means taking the image of a space including the face of the occupant (70).

The headrest adjusting device (800) further includes an obstacle detection means detecting an obstacle (900) immediately before a collision with the vehicle (1000), and the headrest control means may start controlling the position of the headrest when the obstacle (900) is detected by the obstacle detection means.

The headrest adjusting device (800) further includes the obstacle detection means detecting the obstacle (900) immediately before the collision with the vehicle (1000), and the headrest control means may start controlling the position and an angle of the headrest (200) when the obstacle (900) is detected by the obstacle detection means.

The face direction detection means is provided on the vehicle (1000), and may detect the position of the face based on the image taken by the image taking means taking the image of the space including the face of the occupant (70) and the direction of the face based on the detected position of the face and based on a position of a center of the face detected based on the detected position of the face.

The headrest control means is provided at the headrest (200) and may control the position of the headrest (200) based on data obtained by a head portion detection means detecting a contact of a head portion of the occupant (70) of the vehicle (1000) with the headrest (200).

The headrest control means may control the position of the headrest (200) based on a direction of the obstacle (900) and a relative speed of the obstacle with respect to the vehicle (1000) detected by the obstacle detection means.

The headrest control means may control the position and the angle of the headrest (200) based on the direction of the obstacle (900) and the relative speed of the obstacle with respect to the vehicle (1000) detected by the obstacle detection means.

The headrest control means may control at least an up-down position and a front-rear position of the headrest (200) with respect to the vehicle when the obstacle (900) detected by the obstacle detection means is positioned in a rear area of the vehicle.

The headrest control means may control at least the up-down position and the front-rear position of the headrest (200) with respect to the vehicle, and a rotation angle of the headrest (200) with respect to at least an axis of a left-right direction of the vehicle.

The headrest control means may control the headrest (200) based on a direction of the collision with the obstacle (900) and the direction of the face in accordance with a predetermined sequence.

The headrest control means may obtain a movement amount of the headrest (200) in accordance with the sequence and move the headrest (200) by the movement amount obtained in accordance with the sequence.

According to a second viewpoint of the present invention, a headrest adjusting method includes a face position detection step for detecting a position of a face of an occupant (70) of a vehicle, and a headrest control step for driving a headrest (200) of the vehicle (1000) and controlling a position of the headrest (200) based on the position of the face detected in the face position detection step.

According to a third viewpoint of the present invention, a computer program allows a computer to execute a face position detection step for detecting a position of a face of an occupant (70) of a vehicle, and a headrest control step for driving a headrest (200) of the vehicle (1000) and controlling a position of the headrest (200) based on the position of the face detected in the face position detection step.

### [Effect of the invention]

According to the present invention, the headrest efficiently absorbs the impact of the collision.

### BRIEF DESCRIPTION OF DRAWINGS

Fig. 1 is a block diagram showing an overall structure of a headrest adjusting device according to an embodiment of the present invention;
Fig. 2 is a schematic view showing a state where the headrest adjusting device according to the embodiment of the present invention is installed in a vehicle.
Fig. 3 is a diagram showing directions of axes when the headrest is adjusted.
Fig. 4 is a flow chart describing a headrest adjustment process of the headrest adjusting device shown in Fig. 1.
Fig. 5 is a flow chart describing a face position and face direction detection process shown in the flow chart of Fig. 4.
Fig. 6 is a flow chart describing a headrest adjustment amount calculation process shown in the flow chart of Fig. 4.
Fig. 7 is a flow chart describing a headrest moving and rotating process shown in the flow chart of Fig. 4.
Fig. 8 (a) is a table describing a relation between a direction of a face of an occupant and a direction in which the headrest is adjusted when a rear collision occurs. (b) is a table describing a relation between the direction of the face of the occupant and the direction in which a frontal collision occurs.
Fig. 9 (a) is a schematic view showing an example of a relation between a position of the occupant and a position of the headrest before and after the position of the headrest is adjusted when the rear collision occurs. (b) is a schematic view showing an example of a relation between the position of the occupant and the position of the headrest before and after the position of the headrest is adjusted when the frontal collision occurs.
Fig. 10 is a flow chart describing an additional control of the headrest performed subsequent to the flowchart shown in Fig. 7.

### [Explanation of reference numerals]

10 CCD camera (face position detection means, image taking means)
20 Illumination light source (face position detection means, image taking means)
30 Seat position detection sensor
40 Seat angle detection sensor
50 CCD camera angle detection sensor
60 Obstacle detection sensor (obstacle detection means)
70 Occupant
100 ECU (headrest control means, face position detection means, face direction detection means)
110 A/D converter
120 Light emission control device
130 Sensor input circuit
140 Image memory
150 ROM
160 RAM
170 CPU (headrest control means, face position detection means, face direction detection means)
180 Motor drive circuit (headrest control means)
200 Headrest
210 Headrest drive mechanism unit (headrest control means)
211 Motor (headrest control means)
211a Motor
211b Motor
211c Motor
211d Motor
211e Motor
211f Motor
220 Electrostatic capacity sensor (head portion detection means)
299 Pressure sensor
300 Seat for a vehicle
310 Headrest stay
400 Steering wheel
410 Steering column
800 Headrest adjusting device
900 Obstacle
1000 Vehicle

### MODE FOR CARRYING OUT THE INVENTION

A headrest adjusting device according to an embodiment of the present invention will be described with reference to the accompanying drawing figures.

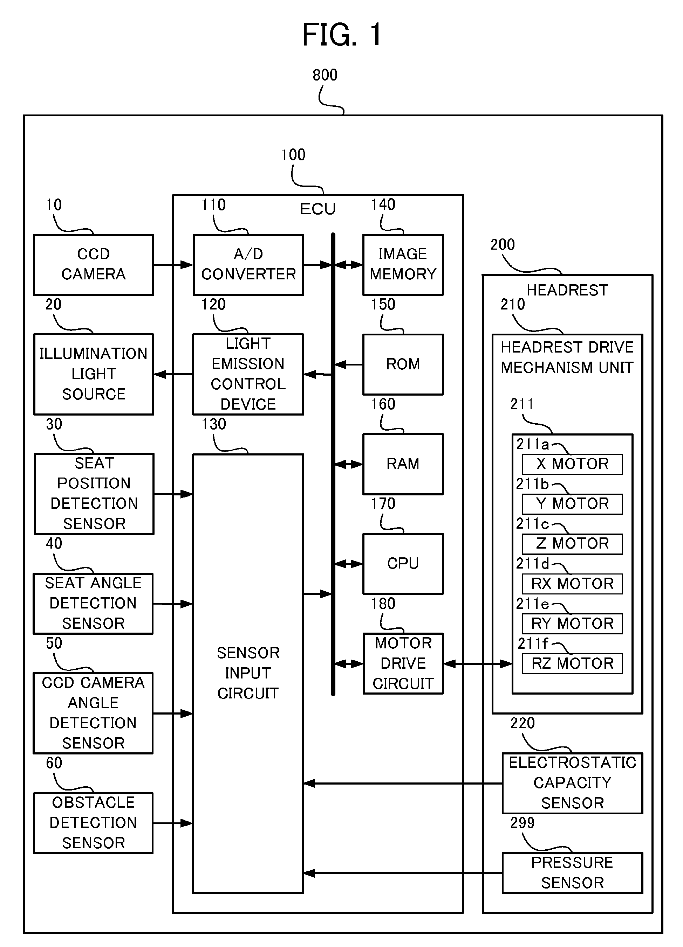

As shown in Fig. 1, a vehicle 1000, which is mounted with a headrest adjusting device 800 according to the embodiment of the present invention, includes a CCD camera 10, an illumination light source 20, a seat position detection sensor 30, a seat angle detection sensor 40, a CCD camera angle detection sensor 50, an obstacle detection sensor 60, a control unit (hereinafter referred to as an ECU, Electric Control Unit) 100, a headrest 200, a vehicle seat 300, a steering wheel 400 and a steering column 410. On the vehicle seat 300, which is positioned on a driver seat side, an occupant 70 (a driver) is seated.

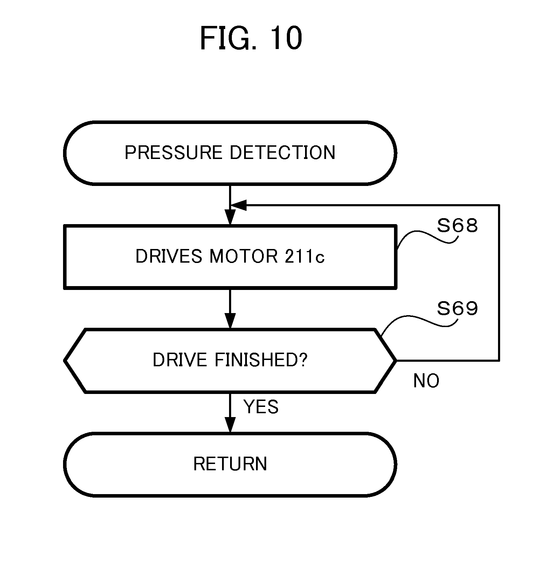

The vehicle seat 300 includes a headrest stay 310. The headrest stay 310 supports the headrest 200 thereon. The headrest 200 includes a headrest drive mechanism unit 210, an electrostatic capacity sensor 220 and a pressure sensor 299. The pressure sensor 299 is referred to only in a description of Fig. 10.

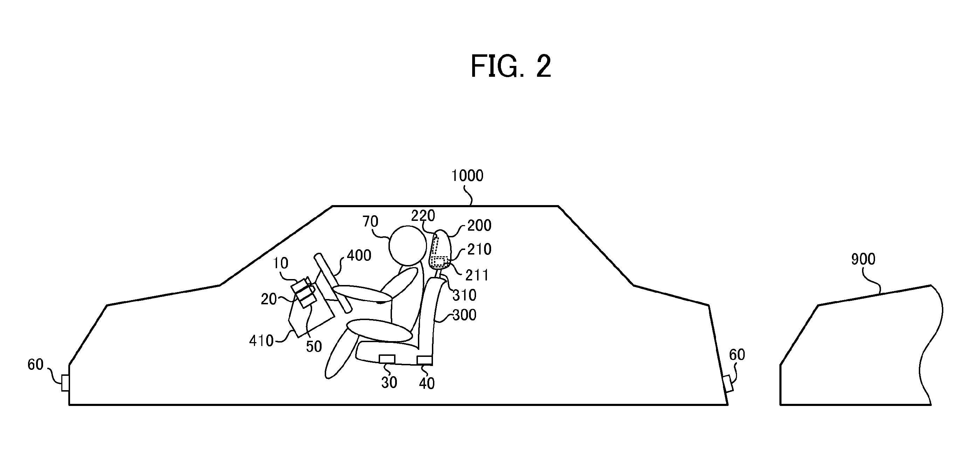

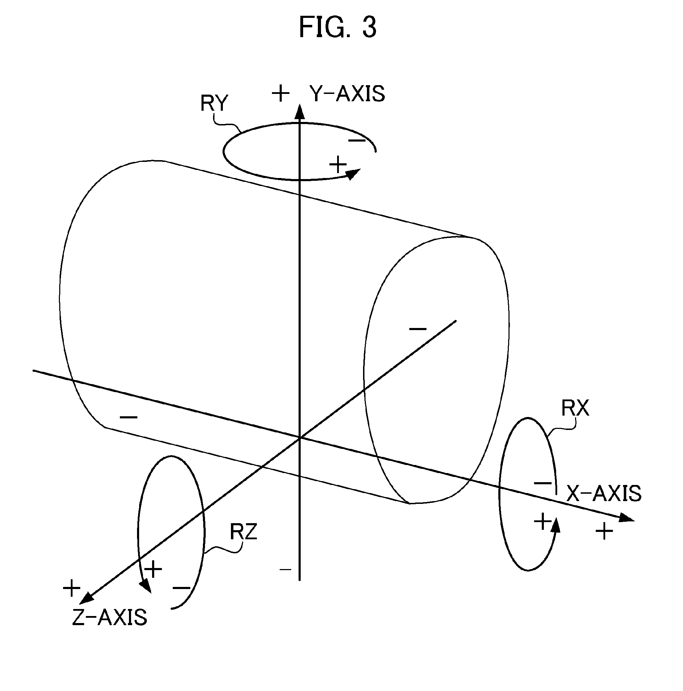

As shown in Fig. 2, the headrest drive mechanism unit 210 and the electrostatic capacity sensor 220 are incorporated within the headrest 200. The headrest drive mechanism unit 210 includes therein motors 211 (211 a to 211 f). As shown Fig. 3, with respect to the headrest 200, an axis in a left-right direction corresponds to an X-axis, an axis in an up-down direction corresponds to a Y-axis, and an axis in a front-rear direction corresponds to a Z-axis. As shown in Fig. 1, the motors 211 includes a motor 211a moving the headrest 200 along the X-axis, a motor 211b moving the headrest 200 along the Y-axis, a motor 211c moving the headrest 200 along the Z-axis, a motor 211d rotating the headrest 200 about the X-axis, a motor 211 e rotating the headrest 200 about the Y-axis and a motor 211f rotating the headrest 200 about the Z-axis. The headrest drive mechanism unit 210 drives the motors 211 a to 211 f. The headrest 200 is moved and rotated by rotations of the motors 211a to 211f.

The CCD camera 10 is provided on an upper portion of the steering column 410 and takes an image of a space including a face of the occupant 70. The CCD camera 10 is connected to the ECU 100 to detect a position of the face and a direction of the face from the image taken.

The illumination light source 20 is provided near the CCD camera 100 and illuminates a head portion of the occupant 70. Because the illumination light source 20 illuminates the head portion of the occupant 70, the CCD camera 10 is able to take the image even at night when light is insufficient.

The seat position detection sensor 30 is provided on a lower portion of the vehicle seat 300 and detects the front-rear position of the vehicle seat 300 with respect to the vehicle 1000. The seat position detection sensor 30 is connected to the ECU 100.

The seat angle detection sensor 40 is provided near a hinge portion of the vehicle seat 300 and detects a seatback angle of the vehicle seat 300. The seat angle detection sensor 40 is connected to the ECU 100.

The CCD camera angle detection sensor 50 is provided near the CCD camera 10 and detects a CCD camera angle with respect to the vehicle 1000. The CCD camera 10 is connected to the ECU 100.

The obstacle detection sensors 60, 60 are provided on a front and a rear of the vehicle 1000 respectively, and measure a distance between the vehicle 1000 and an obstacle to detect the obstacle. Here, the obstacle refers to an object moving toward the vehicle 1000. The obstacle detection sensor 60 is constituted, for example, by an ultrasonic sensor, a microwave sensor, an infrared sensor, an ultraviolet sensor, a visible light sensor, a laser sensor, or an image taking system such as a CCD camera.

The occupant 70 refers to a person who is seated on the vehicle seat 300 on a driver side of the vehicle 1000 to operate the vehicle 1000.

The ECU 100 processes a face image taken by the CCD camera 10, and detects the position and the direction of the face of the occupant 70. The ECU 100 sends a control signal to a motor drive circuit 180 for adjusting the headrest 200 to an optimum position and angle based on the detected position and direction of the face.

The ECU 100 includes an A/D (analogue/digital) converter 110, a light emission control device 120, a sensor input circuit 130, an image memory 140, a ROM (Read Only Memory) 150, a RAM (Random Access Memory) 160, a CPU (Central Processing Unit) 170 and the motor drive circuit 180.

The A/D converter 110 converts analogue image data taken by the CCD camera 10 into digital image data.

The illumination control device 120 lights up and lights off the illumination light source 20 in accordance with a control signal of the CPU 170.

The sensor input circuit 130 is a circuit that receives detection signals transmitted by the seat position detection sensor 30, the seat angle detection sensor 40, the CCD camera angle detection sensor 50, the obstacle detection sensor 60 and the electrostatic capacity sensor 220. The sensor input circuit 130 supplies the CPU 170 with data detected by each sensor.

The image memory 140 records therein the image data digitalized by the A/D converter 110.

The ROM 150 records programs and fixed data for controlling behavior of the CPU 170, for example, a program for prediction of the collision of the vehicle 1000 and a computer program for controlling the headrest 200 in accordance with a predetermined sequence when the collision is predicted, and fixed data.

The RAM 160 functions as a work area of the CPU 170. The RAM 160 stores data of the position and the direction of the face of the occupant 70 supplied by the ECU 100, and the data detected by each sensor and supplied by the sensor input circuit 130.

The CPU 170 executes the program stored in the ROM 150 and detects the position and the direction of the face of the occupant 70 by using the image data recorded in the image memory 140. After the detection, the CPU 170 executes the program stored in the ROM 150, and calculates the optimum position and the angle of the headrest 200 by using the data detected by each sensor, except for the obstacle detection sensor 60, and supplied by the sensor input circuit 130. The CPU 170 sends a motor drive start signal to the motor drive circuit 180 and controls the headrest 200 in accordance with the predetermined sequence. When the sensor input circuit 130 supplies the detection signal of the obstacle detection sensor 60 to the CPU 170, the CPU 170 starts a headrest adjustment process. When the headrest 200 touches the head portion of the occupant 70 before the headrest 200 is moved to the optimum position at the optimum angle, the electrostatic capacity sensor 220 supplies the detection signal to the sensor input circuit 130. The sensor input circuit 130 supplies the detection signal of the electrostatic capacity sensor 220 to the CPU 170. The CPU 170 sends a motor drive stop signal to the motor drive circuit 180 to stop the motors 211a to 211f.

The motor drive circuit 180 obtains the motor drive start signal supplied by the CPU 170 and drives the motors 211a to 211f. When the motors 211a to 211f are operated, the headrest 200 starts moving and rotating. As previously described, when the CPU 170 supplies the motor drive stop signal to the motor drive circuit 180, the motor drive circuit 180 stops the motors 211a to 211f.

The electrostatic capacity sensor 220 is incorporated within a front surface of the headrest 200 and includes sensor electrodes. When a distance between the sensor electrodes changes in a condition that voltage is applied to the sensor electrodes, an electrostatic capacity of the electrostatic capacity sensor 220 changes. When the headrest 200 touches the head portion of the occupant 70, the distance between the sensor electrodes changes, and thus the electrostatic capacity changes. When the electrostatic capacity sensor 220 detects the change in the electrostatic capacity, the electrostatic capacity sensor 220 outputs the detection signal to the sensor input circuit 130.

The vehicle seat 300 is a driver seat and includes the headrest stay 310 in an upper portion thereof. The headrest stay 310 supports the headrest 200 as described above.

The steering wheel 400 is supported on the steering column 410 and rotated by an operation of the occupant 70, who drives the vehicle.

The steering column 410 supports the steering wheel 400 thereon, and includes the CCD camera 10, the illumination light source 20 and the CCD camera angle detection sensor 50, all in an upper portion thereof. An angle adjustment of the steering wheel 400 is available by means of a tilt function.

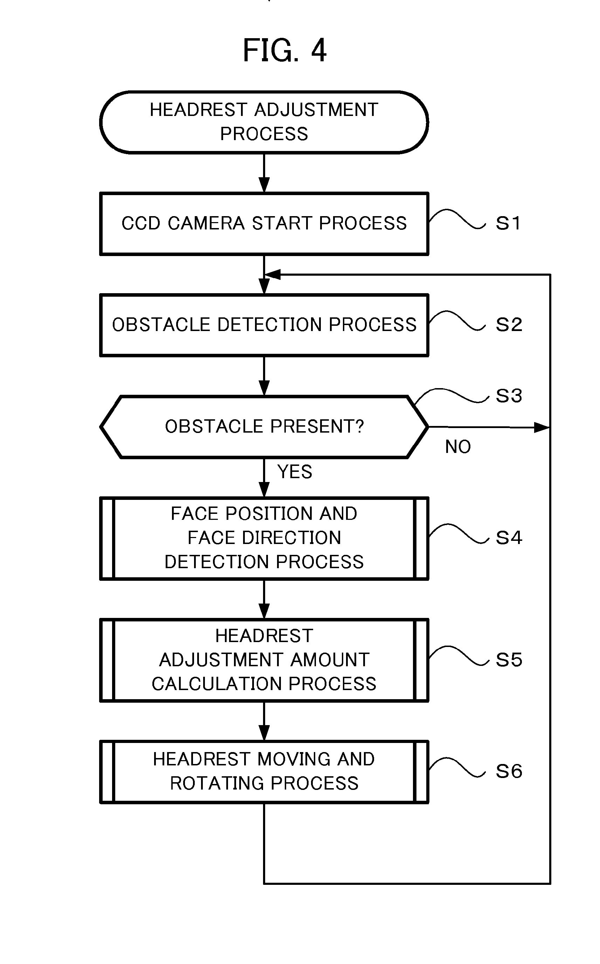

Next, a movement of the headrest adjusting device 800 having the above structure will be described. When the vehicle 1000 is powered on, the CPU 170 performs the headrest adjustment process shown in a flow chart of Fig. 4.

First, the CPU 170 performs a CCD camera start process (Step S1) to take an image of the head portion of the occupant 70. In the CCD camera start process, the CPU 170 turns on the CCD camera 10. After that, the CPU 170 converts the analogue image data taken by the CCD camera 10 into the digital image data by means of the A/D converter 110. After the conversion, the CPU 170 records the digital image data in the image memory 140. The CPU 170 performs a series of process, that is, from image taking by the CCD camera to recording of the digital image data into the image memory 140, periodically. The CPU 170 saves the image of the head portion of the occupant 70 taken by the CCD camera 10 when the occupant 70 starts driving.

Next, the CPU 170 performs an obstacle detection process (Step S2). In the obstacle detection process, the CPU 170 saves the data detected by the obstacle detection sensor 60 and supplied by the sensor input circuit 130 in the RAM 160.

The CPU 170 judges whether or not the obstacle 900 is present in accordance with the data detected by the obstacle detection sensor 60 and saved in the RAM 160 (Step S3). An arbitrary criterion may be applied for judging "obstacle present", however, the "obstacle present" judgment is made when, for example, an object of a predetermined or greater size approaches within a predetermined distance between the object and the vehicle 1000 at a predetermined relative speed with respect to the speed of the vehicle 1000. For example, if the predetermined size corresponds to 0.5m in a vertical direction or in a lateral direction, the predetermined relative speed in a direction where the object approaches corresponds to 5 km/h and the predetermined distance corresponds to 1.0m. Based on these judgment criteria, when the vehicle 1000 is driving at a speed of 50 km/h and when a two-wheel vehicle running towards the vehicle 1000 at a speed of 55 km/h approaches within 1.0m of the vehicle 1000, the CPU 170 makes the "obstacle present" judgment. When the CPU 170 makes the "obstacle present" judgment" (Step S3; Yes), a face position and face direction detection process (Step S4) is performed. To the contrary, when the CPU 170 makes an "obstacle absent" judgment (Step S3; No), the obstacle detection process (Step S2) is performed.

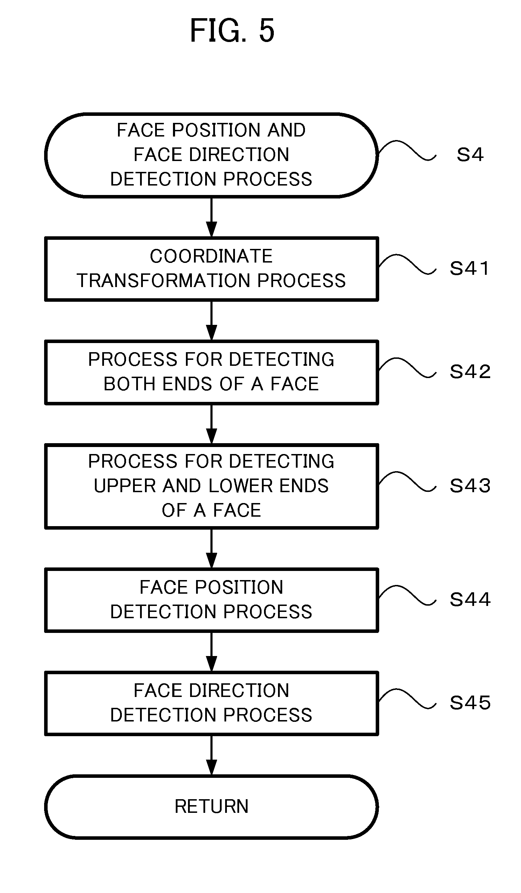

Next, the face position and face direction detection process (Step S4) will be described in detail referring to Fig. 5.

First, the CPU 170 performs a coordinate transformation process (Step S41) for thinning pixels of the digital image data recorded in the image memory 140 to an extent that the following processes may be performed. The CPU 170 saves the digital image data after the coordinate transformation process in the image memory 140.

Next, the CPU 170 performs a process for detecting both ends of a face (Step S42). In the process for detecting both ends of a face, the CPU 170 detects lateral positions of both ends of the face. An arbitrary method for detecting both ends of the face may be applied, however, the detection is made in accordance with, for example, the following procedure.

First, the CPU 170 performs a process for enhancing vertical edges of the image stored in the image memory 140 by using a sobel filter for detecting the vertical edges. More specifically, the CPU 170 reads out the digital image data after the coordinate transformation process from the image memory 140 and performs differentiations on a pixel value in a lateral detection (a horizontal direction). The differentiation is performed in a manner that a difference in brightness of a pixel and a neighboring pixel is calculated. After the differentiation, the CPU 170 processes an image in which an edge portion is extracted (hereinafter referred to as "an edge portion extracted image"). The edge portion extracted image refers to an image where the vertical edge of a background (for example, a vertical frame of a window) and the vertical edge of the face image are extracted.

Next, the CPU 170 projects the pixel value of the edge portion extracted image in a vertical direction (a longitudinal direction) and obtains a histogram. The obtained histogram includes peaks in positions which correspond to positions of the window frame of the background, a vertical profile of the face, eyes, a nose, a mouth and the like. From among these multiple peak positions, the CPU 170 determines two peak positions that lie in the lateral direction apart from each other by a distance that is likely to be a face width of a man.

After the process for detecting both ends of a face (Step S42) is completed, the CPU 170 performs a process for detecting upper and lower ends of a face (Step S43). An arbitrary method for detecting the upper and lower ends of the face may be applied, however, the detection is made in accordance with, for example, the following procedure.

First, the CPU 170 performs a process for enhancing lateral edges of the image stored in the image memory 140 by using a sobel filter for detecting the lateral edges. More specifically, the CPU 170 reads out the digital image data after the coordinate transformation process from the image memory 140 and performs differentiations on a pixel value in the vertical direction (the longitudinal direction). After the differentiation, the CPU 170 processes an edge portion extracted image. The edge portion extracted image refers to an image where the lateral edge of the background (for example, a lateral frame of the window) and the lateral edge of the face image are extracted.

Next, the CPU 170 projects the pixel value of the edge portion extracted image in the lateral direction (the horizontal direction) and obtains a histogram. In the obtained histogram, peaks lie in positions corresponding to positions of the window frame of the background, a lateral profile of the face, the eyes, the nose, the mouth and the like. From among these multiple peak positions, the CPU 170 extracts a predetermined number of positions, in the vertical direction, of which peak values are large. From among these, the CPU 170 determines peak values that are likely to be positions of the eyes/eyebrows and the mouth/jaw, and determines a portion above the eyebrows as the upper end of the face and a portion between the mouth and the jaw as the lower end of the face.

After the process for detecting upper and lower ends of a face (Step S43) is completed, the CPU 170 performs a face position detection process (Step S44). In the face position detection process, a relative position of a position of the head portion of the occupant 70 viewed from the CCD camera 10 and a position of the head portion of the occupant 70 viewed from the CCD 10 when the occupant started driving is detected. The position of the face in the left-right direction is detected in the process for detecting both ends of a face (Step S42) and the position of the face in the vertical direction is detected in the process for detecting upper and lower ends of a face (Step S43). Therefore, only the position of the face in the front-rear direction may be detected. An arbitrary method for detecting the position of the face in the front-rear direction may be applied, however, the detection is made in accordance with, for example, the following procedure. The CPU 170 reads out the image of the head portion of the occupant 70 taken when the occupant 70 starts driving and saved in the image memory 140. The CPU 170 performs the process for detecting both ends of a face and the process for detecting upper and lower ends of a face on the read-out image, and presumes a size of the face according to the positions of both ends, the upper end and the lower end of the face. Next, the CPU 170 performs the same processes on the image of the head portion of the occupant 70 that is currently taken and presumes a size of the face. The CPU 170 compares both sizes of the face detected from these images and presumes how much the head portion of the occupant 70 is moved in the front-rear direction from the position thereof when the occupant 70 starts driving.

After the face position detection process (Step S44) is completed, the CPU 170 performs a face direction detection process (Step S45). In the face direction detection process, directions of the face of the occupant 70 in the left-right direction and in the up-down direction are detected. An arbitrary method for detecting the directions of the face may be applied, however, the detection is made in accordance with, for example, the following procedure.

First, the CPU 170 performs, on the image data processed in the coordinate transformation process (Step S41), a process for binarizing a gray scale of each pixel based on an arbitrary threshold value. Then, pixels of which gray scales are equal to or greater than the threshold value are determined to be black pixels, and thus a coordinate of a center (a center of gravity) of the face is calculated as follows.
X-coordinate of a center of the face=Σxi/n xi: Value of X-coordinate of nth black pixel
Y-coordinate of a center of the face=Σyi/n yi: Value of Y-coordinate of nth black pixel i: 1 to n n refers to a total number of the black pixels
A range in which the center of the face is calculated may be limited to an area between both ends of the face, and an area between the upper end of the face and the lower end of the face.

Then, the CPU 170 detects the direction of the face according to a relation among both ends, the upper end, the lower end and the center of the face. For example, when the center of the face is positioned in a center of both ends of the face, it is judged that the face faces front. When the center of the face is positioned on the left of the center between both ends of the face, it is judged that the face faces left when viewed from the CCD camera 10. When the center of the face is positioned on the right of the center between both ends of the face, it is judged that the face faces right when viewed from the CCD camera 10.

After the face direction detection process (Step S45) is completed, the CPU 170 finishes the face position and face direction detection process (Step S4) and performs a headrest adjustment amount calculation process (Step S5).

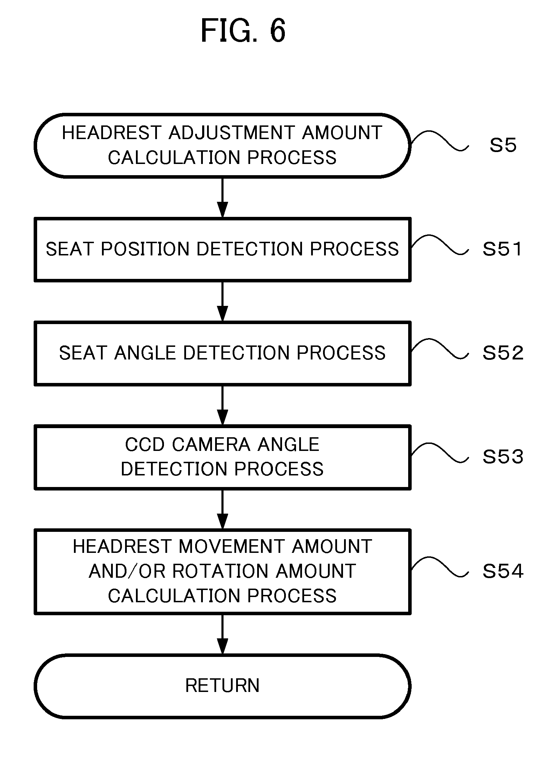

A flow chart of the headrest adjustment amount calculation process (Step S5) is shown in Fig. 6.

In the headrest adjustment amount calculation process (Step S5), the CPU 170 first performs a seat position detection process (Step S51). In the seat position detection process, the CPU 170 reads the data of the seat position detection sensor 30 via the sensor input circuit 130.

Next, the CPU 170 performs a seat angle detection process (Step S52). In the seat angle detection process, the CPU 170 reads the data of the seat angle detection sensor 40 via the sensor input circuit 130.

Further, the CPU 170 performs a CCD camera angle detection process (Step S53).

In the CCD camera angle detection process, the CPU 170 reads the data of the camera angle detection sensor 50 via the sensor input circuit 130.

Then, the CPU 170 performs a headrest movement amount and/or rotation amount calculation process (Step S54).

In the headrest movement amount and/or rotation amount calculation process, the CPU 170 calculates a movement amount and a rotation amount of the headrest 200, considering the position and the direction of the face detected in the face position and face direction detection process (Step S4), and the data saved in the RAM 160 in the obstacle detection process (Step S2), in addition to the position of the seat, the seat angle and the CCD camera angle that are previously detected.

An arbitrary method for calculating the movement amount and the rotation amount of the headrest 200 may be applied. As an example, a method will be described hereunder where the CPU 170 obtains the relative position and angle of the head portion of the occupant 70 with respect to the headrest 200, and allows the headrest to approach the head portion of the occupant 70 from a direction opposite from the face direction of the occupant 70, that is, from exactly behind the head portion of the occupant 70. According to the embodiment, a drive means is structured so that the motors 211 a to 211f provided to the six axes in total, that is, the X-axis, the Y-axis, the Z-axis, an RX direction corresponding to a direction of a rotation about the X-axis, an RY direction corresponding to a direction of a rotation about the Y-axis, an RZ direction corresponding to a direction of a rotation about the Z-axis, are independently controlled.

"An X-axis direction (the lateral direction)" corresponds to an orthogonal direction to a traveling direction of the vehicle 1000, that is, the left-right direction when viewed from the occupant 70. A left-hand side corresponds to a + direction and a right-hand side corresponds to a - direction when viewed from the occupant 70. "A Y-axis direction (the vertical direction)" corresponds to an orthogonal direction to the traveling direction of the vehicle 1000, that is, the up-down direction when viewed from the occupant 70. An upward direction corresponds to a + direction and a downward direction corresponds to a - direction when viewed from the occupant 70. "A Z-axis direction (the front-rear direction)" corresponds to the traveling direction of the vehicle 1000, that is, the front-rear direction when viewed from the occupant 70. A front direction corresponds to a + direction and a rear direction corresponds to a - direction when viewed from the occupant 70. "An RX-direction" corresponds to a direction of the rotation with respect to the X-axis and a right-hand screw direction corresponds to a + direction and a left-hand screw direction corresponds to a - direction. "The RY-direction" corresponds to the direction of the rotation with respect to the Y-axis and a right-hand screw direction corresponds to a + direction and a left-hand screw direction corresponds to a - direction. "The RZ-direction" corresponds to the direction of the rotation with respect to the Z-axis and a right-hand screw direction corresponds to a + direction and a left-hand screw direction corresponds to a - direction.

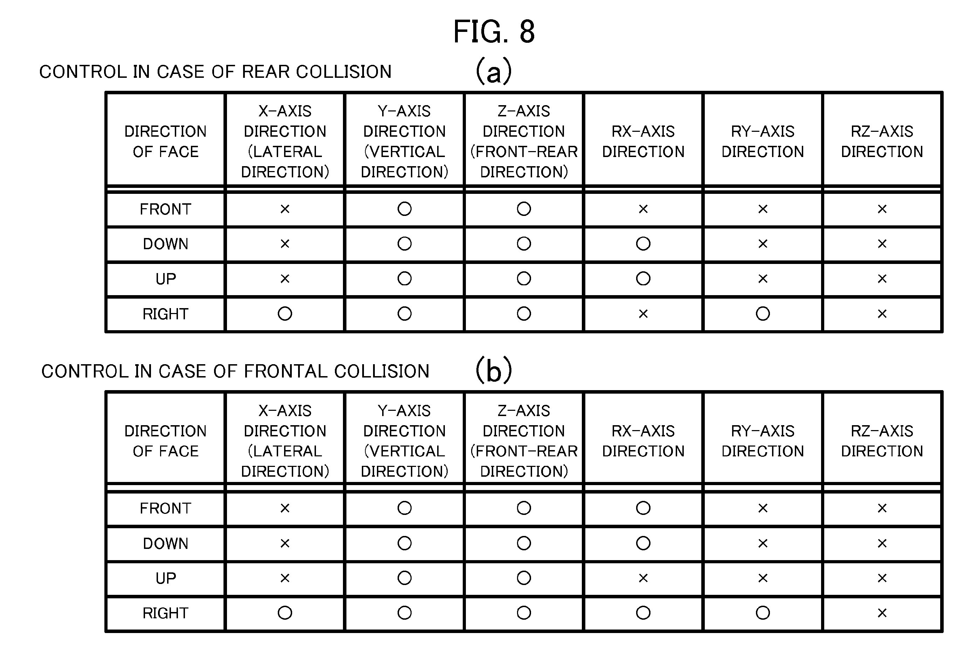

Fig. 8 (a) shows an example of a relation between the direction of the face of the occupant 70 and a direction in which the headrest 200 needs to be adjusted when the obstacle 900 detected in the obstacle detection process (Step S2) collides with the vehicle 1000 from a rear of the vehicle 1000.

On the other hand, Fig. 8 (b) shows an example of a relation between the direction of the face of the occupant 70 and a direction in which the headrest 200 needs to be adjusted when the obstacle 900 detected in the obstacle detection process (Step S2) collides with the vehicle 1000 from a front of the vehicle 1000.

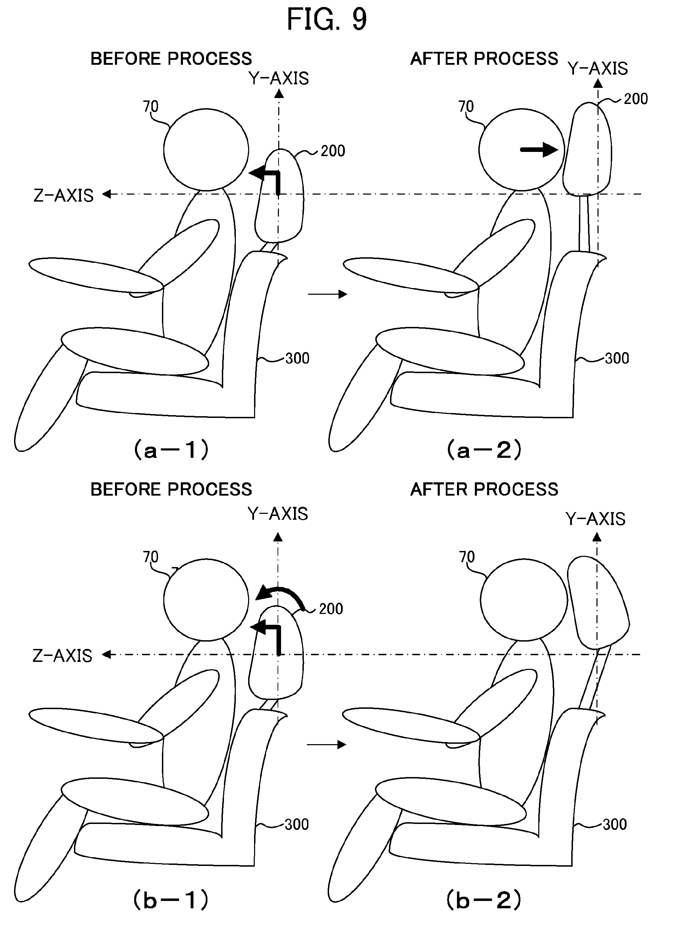

First, the movement when the obstacle 900 collides with the vehicle 1000 from the rear of the vehicle 1000 will be described. In principle, when the head portion of the occupant 70 is not misaligned in the lateral direction with respect to the headrest 200, adjustment in the X-axis direction is not performed. A summary of this movement is explained hereunder. In case of a rear collision, the head portion of the occupant 70 moves relatively rearward. Here, the head portion collides with the headrest 200 if no process is made to the headrest 200. Therefore, the headrest 200 is moved from a normal condition where the headrest 200 is away from the head portion of the occupant 70 as shown in Fig. 9 (a-1) to a condition where the headrest 200 touches the head of the occupant 70 as shown in Fig. (a-2). This allows the head portion of the occupant 70 to be supported by the headrest 200 at the time of the collision, and thus a large movement of or an impact on the head is reduced thereby ensuring the occupant's safety. The CPU 170 has this movement performed in an appropriate manner based on the direction of the face right before the collision. Specific description is given for each case hereunder.

When the face of the occupant 70 faces "front", a movement sequence is preliminarily set so that the headrest 200 is moved to the same height as that of the head portion of the occupant 70 in the Y-axis direction and then the headrest 200 is moved in the + direction of the Z-axis so as to be closer to the head of the occupant 70. Consequently, the CPU 170 obtains, as the movement amount of the headrest 200 (an amount that the headrest should be moved), current distances between the head portion (a back of the head) of the occupant 70 and the headrest 200 (a front side) in the Y-axis direction and in the X-axis direction.

When the face of the occupant 70 faces "down", a movement sequence is set so that i) the headrest 200 is moved to a higher position than the position of the head portion of the occupant 70 in the Y-axis direction, ii) the headrest 200 is rotated in the + direction (downward) of the RX direction based on the direction of the face of the occupant 70 and iii) the headrest 200 is moved in the - direction of the Y-axis and at the same time moved in the + direction of Z-axis in order to be closer to the head of the occupant 70. Consequently, the CPU 170 obtains, as the movement amount, a current distance in the Y-axis direction between the position that is higher than the position of the head portion of the occupant 70 by a predetermined amount and the headrest 200, a rotation angle in the RX direction that corresponds to an angle of the face with respect to the horizontal direction and distances in the Y-axis direction and in the Z-axis direction between the headrest 200 after the movement and the back of the head.

When the face of the occupant 70 faces "up", a movement sequence is set so that i) the headrest 200 is moved to a lower position than the position of the head portion of the occupant 70 in the Y-axis direction, ii) the headrest is rotated in the - direction (upward) of the RX direction based on the direction of the face of the occupant 70 and iii) the headrest 200 is moved in the + direction of the Y-axis and at the same time moved in the + direction of Z-axis in order to be closer to the head of the occupant 70. Consequently, the CPU 170 obtains, as the movement amount, a current distance in the Y-axis direction between the position lower than the position of the head portion of the occupant 70 by a predetermined amount and the headrest 200, a rotation angle in the RX direction that corresponds to an angle of the face with respect to the horizontal direction and distances in the Y-axis direction and in the Z-axis direction between the headrest 200 after the movement and the back of the head.

When the face of the occupant 70 faces to the "right", a movement sequence is preliminarily set so that i) the headrest 200 is moved to the same height as that of the head portion of the occupant 70 in the Y-axis direction and at the same time moved in the + direction of the X-axis, ii) the headrest 200 is rotated in the - direction of the RY direction in order to turn to the right based on the direction of the face of the occupant 70 and iii) the headrest 200 is moved in the - direction of the X-axis and at the same time moved in the + direction of Z-axis in order to be closer to the head of the occupant 70. Consequently, the CPU 170 obtains, as the movement amount or the rotation amount, a current distance in the Y-axis direction between the head portion of the occupant 70 and the headrest 200, a rotation angle in the RY direction that corresponds to an angle of the face in the left-right direction with respect to the front, and distances in the Y-axis direction and in the Z-axis direction between the back of the head and the headrest 200 after the movement.

Next, the movement in case of a frontal collision will be described referring to Fig. 8 (b). In case of the frontal collision, the movement amount and the rotation amount are calculated with a consideration that a chest region of the occupant 70 is constrained to some extent by a seatbelt or the like and at the same time the head is inclined forward and downward. Specifically, at the time of the frontal collision, the chest of the occupant 70 is not moved to a large extent as it is constrained by the seatbelt or the like, however, the head is moved forward first and, after that, rearward as a reaction. Thus, the head collides with the headrest 200 when moving rearward as the reaction if no process is made to the headrest 200. In the embodiment, therefore, the headrest 200 is preliminary moved from a normal operation condition schematically shown in Fig. 9 (b-1) to a condition where the headrest 200 supports with good cushioning the head portion of the occupant 70 that is moved back due to the reaction. The CPU 170 has this movement performed based on the direction of the face exactly before the collision. Specific description will be given for each case hereunder.

When the face of the occupant 70 faces "front", a movement sequence is set so that i) the headrest 200 is moved to a position that is higher than the position of the head portion of the occupant 70 in the Y-axis direction, ii) the headrest 200 is rotated in the + direction (downward) of the RX direction based on the direction of the face of the occupant 70 and iii) the headrest 200 is moved in the - direction of the Y-axis and at the same time moved in the + direction of Z-axis in order to be closer to the head of the occupant 70. Consequently, the CPU 170 obtains, as the movement amount or the rotation amount, current distances in the Y-axis direction and in the Z-axis direction between the head portion of the occupant 70 and the headrest 200, a rotation angle in the RX direction that corresponds to an angle of the face with respect to the horizontal direction, and distances between the headrest 200 and the back of the head in the Y-axis direction and in the Z-axis direction after the movement.

When the face of the occupant 70 faces "down", a movement sequence is set so that i) the headrest 200 is moved to a position that is higher than the position of the head portion of the occupant 70 in the Y-axis direction, ii) the headrest 200 is rotated in the + direction of the RX direction based on the direction of the face of the occupant 70 and iii) the headrest 200 is moved in the - direction of the Y-axis and at the same time moved in the + direction of the Z-axis in order to be closer to the head of the occupant 70. Consequently, the CPU 170 obtains, as the movement amount or the rotation amount, a current distance in the Y-axis direction between the position that is lower than the position of the head portion of the occupant 70 by a predetermined amount and the headrest 200, a rotation angle in the RX direction that corresponds to an angle of the face with respect to the horizontal direction, and distances in the Y-axis direction and in the Z-axis direction between the back of the head and the headrest 200 after the movement.

When the face of the occupant 70 faces "up", a movement sequence is preliminarily set so that i) the headrest 200 is moved to the same height as that of the head portion of the occupant 70 in the Y-axis direction and ii) the headrest is moved in the + direction the Z-axis in order to be closer to the head of the occupant 70. Consequently, the CPU 170 obtains, as the movement amount, a current distance in the Y-axis direction between the lower position than the head portion of the occupant 70 by the predetermined amount and the headrest 200, and distances in the Y-axis direction and in the Z-axis direction between the headrest 200 after the movement, and the back of the head.

When the face of the occupant 70 faces "right", a movement sequence is preliminarily set so that i) the headrest 200 is moved to a position that is higher than the position of the head portion of the occupant 70 in the Y-axis direction and at the same time moved in the + direction of the X-axis, ii) the headrest 200 is rotated in the - direction of the RY direction and in the + direction of the RX direction in order to turn to the lower right based on the direction of the face of the occupant 70 and iii) the headrest 200 is moved in the - direction of the X-axis and in the - direction of the Y-axis, and at the same time moved in the + direction of Z-axis in order to be closer to the head of the occupant 70. Consequently, the CPU 170 obtains, as the movement amount or the rotation amount, a current distance in the Y-axis direction between the position that is higher than the position of the head portion of the occupant 70 by a predetermined amount and the headrest 200, rotation angles in the RX direction and in the RY direction that correspond to up-down and left-right angles of the face with respect to a front direction, and distances in the X-axis direction, in the Y-axis direction and in the Z-axis direction between the headrest 200 after the movement and the back of the head.

When the headrest movement amount and/or rotation amount calculation process (Step 54) is completed, the CPU 170 finishes the headrest adjustment amount calculation process (Step S5) and performs a headrest moving and rotating process (Step S6).

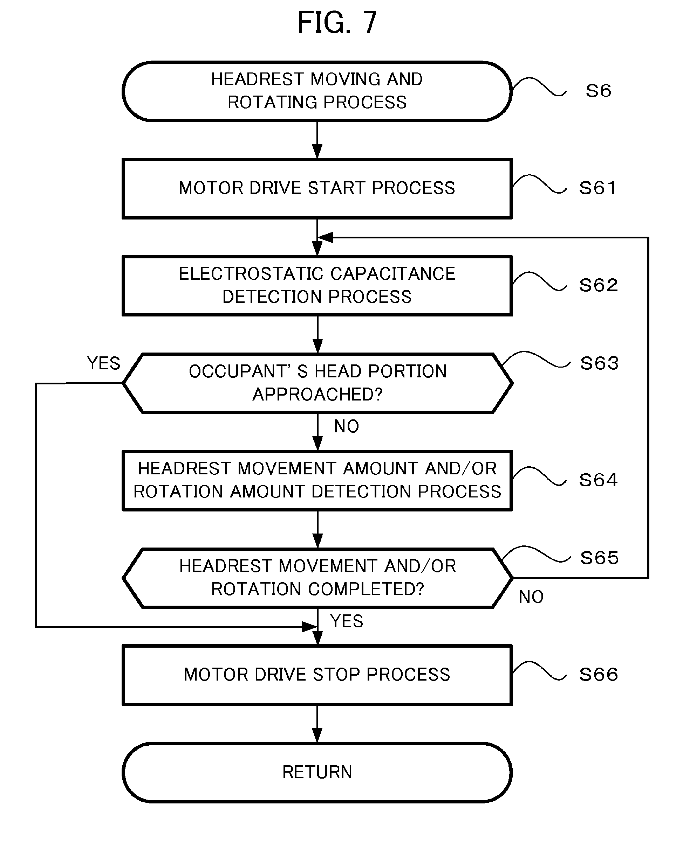

The CPU 170 performs the headrest moving and rotating process (Step S6) shown in a flow chart of Fig. 7. First, the CPU 170 performs a motor drive start process (Step S61). In the motor drive start process, the CPU 170 sends a drive start signal to the motor drive circuit 180 that drives the motor 211 targeted to be driven in the headrest drive mechanism portion 210. After that, the CPU 170 sends a control signal to the motor drive circuit 180 based on the above-mentioned preliminarily set sequence and the calculated value calculated in the headrest movement amount and/or rotation amount calculation process (Step S54). The motor drive circuit 180 controls each motor 211a to 211f in accordance with the control signal and sequentially performs the instructed movement and rotation.

More specifically, when the position of the face of the occupant 70 corresponds to "front" in the rear collision, the CPU 170 drives, via the motor drive circuit 180, the motor 211b to move the headrest 200 in the + direction of the Y-axis by the obtained movement amount and drives the motor 211c to move the headrest 200 in the + direction of the Z-axis by the calculated movement amount.

When the face of the occupant 70 faces "down" in the rear collision, the CPU 170, via the motor drive circuit 180, first, i) drives the motor 211b to move the headrest 200 in the + direction of the Y-axis by the calculated movement amount, ii) drives the motor 211d to rotate the headrest 200 in the + direction of the RX direction by the obtained angle, and further, iii) drives the motors 211b and the motor 211c to move the headrest 200 in the - direction of the Y-axis and in the + direction of the Z-axis by the respective obtained amounts.

When the face of the occupant 70 faces "up" in the rear collision, the CPU 170, via the motor drive circuit 180, first, i) drives the motor 211b to move the headrest 200 in the - direction of the Y-axis by the obtained movement amount, ii) drives the motor 211d to rotate the headrest 200 in the - direction of the RX direction by the obtained angle, and iii) drives the 211b and the motor 211c to move the headrest 200 in the + direction of the Y-axis by the obtained amount and in the + direction of the Z-axis by the obtained amount.

When the face of the occupant 70 faces to the "right" in the rear collision, the CPU 170, via the motor drive circuit 180, i) drives the motor 211b to move the headrest 200 in the - direction of the Y-axis by the obtained movement amount, ii) drives the motor 211e to rotate the headrest 200 in the - direction of the RY direction by the obtained angle, and iii) drives the motor 211 a and the motor 211c to move the headrest 200 in the - direction of the X-axis and at the same time in the + direction of the Z-axis by the respective obtained amounts.

When the position of the face of the occupant 70 corresponds to "front" in the frontal collision, the CPU 170 i) drives the motor 211b to move the headrest 200 in the + direction of the Y-axis by the obtained movement amount, ii) drives the motors 211d, 211b and 211c to rotate the headrest 200 in the + direction of the RX direction by the obtained angle, and iii) to move the headrest 200 in the - direction of the Y-axis direction and at the same time move the headrest 200 in the + direction of the Z-axis by the obtained amount via the motor drive circuit 180.

When the face of the occupant 70 faces "down" in the frontal collision, the CPU 170, via the motor drive circuit 180, i) drives the motor 211b to move the headrest 200 in the + direction of the Y-axis by the obtained movement amount, ii) drives the motors 211d, 211b and 211c to rotate the headrest 200 in the + direction of the RX direction by the obtained angle, and iii) to move the headrest 200 in the - direction of the Y-axis direction and at the same time move the headrest 200 in the + direction of the Z-axis by the respective obtained amounts.

When the face of the occupant 70 faces "up" in the frontal collision, the CPU 170, via the motor drive circuit 180, i) drives the motor 211b to move the headrest 200 in the Y-axis direction by the obtained movement amount and ii) drives the motor 211c to move the headrest 200 in the + direction of the Z-axis by the obtained movement amount.

When the face of the occupant 70 faces to the "right" in the frontal collision, the CPU 170, via the motor drive circuit 180, i) drives the motors 211b and 211a to move the headrest 200 in the Y-axis by the obtained movement amount and at the same time to move the headrest 200 in the + direction of the X-axis by the obtained movement amount, ii) drives the motors 211e, 211a and 211c to rotate the headrest 200 in the - direction of the RY direction and in the + direction of the RX direction by the respective obtained angles, and iii) to move the headrest 200 in the - direction of the X-axis and in the - direction of the Y-axis and at the same time move the headrest 200 in the + direction of the Z-axis by the respective obtained amounts.

When the movement and the rotation of the headrest 200 are started in Step S61, the CPU 170 performs an electrostatic capacitance detection process (Step S62). In the electrostatic capacitance detection process, the CPU 170 inputs via the sensor input circuit 130 the data of the electrostatic capacity sensor 220 in the headrest 200.

Next, the CPU 170 judges whether an approach of the occupant's head portion is true or false (Step S63). The true or false judgment of the approach of the occupant's head portion is made, for example, based on whether the value obtained in the electrostatic capacitance detection process equals to or is greater than a preliminarily set threshold value. In other words, the CPU 170 moves the headrest 200 and at the same time keeps on monitoring the approach of the headrest 200 to the head portion.

When the CPU 170 determines that the head portion of the occupant 70 has approached or touched the headrest (Step S63; Yes), the CPU 170 performs a motor drive stop process (Step S66). On the other hand, the CPU 170 performs a headrest movement amount and/or rotation amount detection process (Step S64) when it determines that the head portion of the occupant 70 has not approached the headrest (Step S63; No).

In the headrest movement amount and/or rotation amount detection process (Step S64), the CPU 170 detects an actual movement amount and an actual rotation amount of the headrest 200. The CPU 170 may calculate the actual movement amount and the actual rotation amount of the headrest 200 based on a set period or a set number of times in the CPU 170, or may judge based on a control signal from the motor drive circuit 180.

Next, the CPU 170 judges whether a completion of the movement and/or the rotation of the headrest is true or false (Step S65). The true or false judgment of the completion of the movement and/or the rotation of the headrest is made based on whether the actual movement amount and the actual rotation amount of the headrest 200 reach the values obtained in the headrest movement amount and/or rotation amount calculation process (Step 54). When it is judged that the movement and/or the rotation of the headrest 200 have been completed (Step S65; Yes), the motor drive stop process is performed (Step S66). To the contrary, when it is judged that the movement or the rotation of the headrest 200 has not been competed (Step S65; No), the electrostatic capacitance detection process is performed again (Step S62).

Then, the CPU 170 performs the motor drive stop process (Step S66) when it detects that the head portion of the occupant 70 has approached the headrest (S63; Yes) or when it judges that the movement and the rotation of the headrest 200 have been completed (S65; Yes).

In the motor drive stop process, the CPU 170 sends a control signal to the motor drive circuit 180 to stop driving of the motor. When the motor drive stop process (Step S66) is completed, the CPU 170 finishes the headrest moving and rotating process (Step S6) and returns to the obstacle detection process (Step S2).

As described above, when a possibility of the collision is detected, the headrest adjusting device according to the embodiment moves and rotates, in advance, the headrest 200 to the position and at the angle that are appropriate for supporting the head portion. This makes it possible for the head portion to be supported and the impact on the head portion to be reduced even if the collision occurs, thereby improving a safety of the vehicle.

This invention is not limited to the above-mentioned embodiment and various changes and applications are available.

A system structure described referring to Fig. 1 and Fig. 2 is an example and may be arbitrarily changed. For instance, the obstacle detection sensors are provided on the front and the rear of the vehicle in the above-mentioned embodiment, however, the number of the obstacle detection sensor may be increased or decreased, or a location thereof may be changed, for example, to a side of the vehicle. For instance, the CCD camera 10 is provided on the upper portion of the steering column 410 in the above-mentioned embodiment, however, a location and a structure of the CCD camera 10 may be arbitrarily changed as long as it takes an appropriate image of the occupant 70. In addition, the above-mentioned embodiment mainly describes the control of the headrest 200 of the driver seat, however, a similar headrest control system may be provided to a passenger seat or to a rear seat.

Further, the processes performed by the system and their procedures may be appropriately changed or modified. For instance, the position and the direction of the face may be detected by way of a pattern matching with the face image that has been stored in the ROM or the like instead of by way of the edge detection or the detection of the center of the face. The system structure is not limited to a structure where the face (the head portion) is located by way of an image analysis. The position of the face may be determined by way of an optical sensor or an optical distance sensor.

Further, the above-mentioned embodiment describes the example where the headrest 200 is driven in the directions of six axes in total so as to be moved in the X -axis direction, the Y-axis direction, the Z-axis direction, the RX direction, the RY direction and the RZ direction respectively. However, a structure having three axes may be available where the headrest 200 is moved in the X-axis direction, the Y-axis direction and the Z-axis direction but not in the RX direction, the RY direction or the RZ direction. This makes a structure and a control easier. Further, a structure where the headrest 200 is moved only in the Y-axis direction and the Z-axis direction, or a structure where the headrest 200 is moved only in the Z-axis direction is available. Other appropriate combinations are also available, where the headrest 200 is moved, for example, in the Y-axis direction, in the Z-axis direction, in the RX direction and in the RY direction. There is no need to provide an actuator or the like to an axis that is not subject to the control. Further, a greater number of axes may be controlled.

Further, the movement sequences of the headrest 200 described above are examples and other movement sequences may be applied.

Still further, in the above-described embodiment, the headrest 200 is controlled based on the direction of the collision and the direction of the face, however, the headrest 200 may be controlled based only on the direction of the collision without considering the direction of the face. Types of the directions of the face may be reduced. In addition, the control patterns (the combination of the axes subject to the control) shown in Figs. 8 (a) and (b) are examples and appropriate changes are available.

Further, the movement sequences of the headrest 200 are classified depending on the frontal collision or the rear collision, and on the direction of the face. However, other parameters may be introduced. For example, a speed may be one of the parameters so that the control is not provided when a relative speed (or an absolute speed) is low, or the control may include several types of controls and all the types of controls are provided when a threshold value is exceeded. More specifically, for example, controls in the Y-axis direction and in the Z-axis direction may be provided when a first threshold value is exceeded, controls in the Y-axis direction, in the Z-axis direction, in the RX direction and in the RY directions may be provided when a second threshold value is exceeded, and all the controls may be provided when a third threshold value is exceeded.

The position of the headrest 200 is fixed after the position adjustment is made, however for example, the headrest may be gradually moved rearward when the head portion pushes the headrest at the time of the collision with a pressure that equals to or is greater than a threshold value, thereby reducing the pressure applied to the head portion. In this case, the pressure sensor 299 (Fig. 1) may be provided in the headrest 200 and a predetermined activation flag may be set when Step S66 of Fig. 7 is finished. When the predetermined activation flag is set and when the pressure sensor 299 detects the pressure that equals to or is greater than the threshold value, the CPU 170 starts the processes, for example, shown in Fig. 10 and outputs a driving signal to the motor 211c so that the headrest 200 is moved rearward to a predetermined position at a predetermined speed (or a speed set based on the pressure) (Steps S68 and S69). The activation flag is reset, for example, after a certain period of time. Further, the above-mentioned embodiment describes the structure where the motors 211 a to 211f are independently controlled each of which moves the headrest 200 in the directions of six axes in total, that is, the X-axis direction, the Y-axis direction, the Z-axis direction, the RX direction, the RY direction and the RZ direction respectively. The number of axes may be increased or decreased, or the movement in each axis may be controlled in an interlocked manner with the other axis, if necessary. Further, other actuators than the motors may be used.

Further, a head portion detection means is not limited to the electrostatic capacity process sensor, and may be a displacement sensor, or an imaging system such as the CCD camera.

The flow charts and the forms of the movement of the headrest described in the above-mentioned embodiment are examples, and the present invention is not limited to these processing routines.

Further, the above-mentioned embodiment shows the example of the headrest adjusting device, however, the same applies to the headrest adjusting method.

The present application is based on Japanese patent application No. 2006-266794 filed on September 29, 2006 and includes the specification, the scope of claims for patent, the drawings and the summary thereof. The whole of the disclosure of the above-mentioned Japanese patent application is included in the present specification as reference.

### INDUSTRIAL APPLICABILITY

The headrest adjusting device according to the present invention is useful for a device adjusting a position and an angle of a headrest provided on a seat of a vehicle. The headrest adjusting method according to the present invention is applied to a vehicle seat having a headrest.

## Claims

1. A headrest adjusting device (800) comprising;
a face position detection means detecting a position of a face of an occupant (70) of a vehicle (1000); and
a headrest control means controlling a position of a headrest (200) of the vehicle (1000) based on the position of the face detected by the face position detection means.

2. The headrest adjusting device (800) according to Claim 1, further comprising;
a face direction detection means detecting a direction of the face of the occupant (70) of the vehicle (1000); and
the headrest control means controlling a position and an angle of the headrest (200) based on the position of the face detected by the face position detection means and based on the direction of the face detected by the face direction detection means.

3. The headrest adjusting device (800) according to Claim 1, wherein the face position detection means is provided on the vehicle (1000) and detects the position of the face based on an image of a space including the face of the occupant (70) taken by an image taking means.

4. The headrest adjusting device (800) according to Claim 1, further comprising:
an obstacle detection means detecting an obstacle (900) immediately before a collision with the vehicle (1000); and
the headrest control means starting controlling the position of the headrest (200) when the obstacle (900) is detected by the obstacle detection means.

5. The headrest adjusting device (800) according to Claim 2, further comprising:
an obstacle detection means detecting the obstacle (900) immediately before the collision with the vehicle (1000); and
the headrest control means starting controlling the position and the angle of the headrest (200) when the obstacle is detected by the obstacle detection means.

6. The headrest adjusting device (800) according to Claim 2, wherein the face direction detection means is provided on the vehicle (1000) and detects the position of the face based on the image of the space including the face of the occupant (70) taken by the image taking means and the direction of the face based on the detected position of the face and based on a position of a center of the face detected based on the detected position of the face.

7. The headrest adjusting device (800) according to Claim 1, wherein the headrest control means is provided at the headrest (200) and controls the position of the headrest (200) based on data obtained by a head portion detection means detecting a contact of a head portion of the occupant (70) of the vehicle with the headrest (200).

8. The headrest adjusting device (800) according to Claim 1, wherein the headrest control means controls the position of the headrest (200) based on a direction of the obstacle (900) detected by the obstacle detection means and based on a relative speed of the obstacle (900) with respect to the vehicle (1000).

9. The headrest adjusting device (800) according to Claim 2, wherein the headrest control means controls the position and the angle of the headrest (200) based on a direction of the obstacle (900) detected by the obstacle detection means and based on a relative speed of the obstacle (900) with respect to the vehicle (1000).

10. The headrest adjusting device (800) according to Claim 1, wherein the headrest control means controls at least an up-down position and a front-rear position of the headrest (200) with respect to the vehicle when the obstacle (900) detected by the obstacle detection means is positioned in a rear area of the vehicle.

11. The headrest adjusting device (800) according to Claim 2, wherein the headrest control means controls at least the up-down position and the front-rear position of the headrest (200) with respect to the vehicle, and a rotation angle of the headrest (200) with respect to at least an axis of a left-right direction of the vehicle when the obstacle (900) detected by the obstacle detection means is positioned in a front area of the vehicle.

12. The headrest adjusting device (800) according to Claim 1, wherein the headrest control means controls the headrest (200) based on a direction of the collision with the obstacle (900) and the direction of the face in accordance with a predetermined sequence.

13. The headrest adjusting device (800) according to Claim 12, wherein the headrest control means obtains a movement amount of the headrest (200) in accordance with the sequence and moves the headrest (200) by the movement amount obtained in accordance with the sequence.

14. A headrest adjusting method comprising;
a face position detection step for detecting a position of a face of an occupant (70) of a vehicle (1000); and
a headrest control step driving a headrest (200) of the vehicle (1000) and controlling an position of the headrest (200) of the vehicle (1000) based on the position of the face detected by the face position detection step.

15. A computer program for allowing a computer to execute
a face position detection step for detecting a position of a face of an occupant (70) of a vehicle, and
a headrest control step for driving a headrest (200) of the vehicle (1000) and controlling a position of the headrest (200) based on the position of the face detected in the face position detection step.

## Amended claims

### Amended claims under Art. 19.1 PCT

**1.** (amended) A headrest adjusting device (800) comprising;
a face position detection means detecting a position of a face of an occupant (70) of a vehicle (1000);
a face direction detection means detecting a direction of the face of the occupant (70) of the vehicle (1000);
an obstacle detection means detecting an obstacle (900) immediately before a collision with the vehicle (1000); and
a headrest control means controlling a position and an angle of a headrest (200) of the vehicle (1000) based on the position of the face detected by the face position detection means and based on the direction of the face detected by the face direction detection means when the obstacle is detected by the obstacle detection means.

**2.** (canceled)

**3.** The headrest adjusting device (800) according to Claim 1, wherein the face position detection means is provided on the vehicle (1000) and detects the position of the face based on an image of a space including the face of the occupant (70) taken by an image taking means.

**4.** (canceled)

**5.** (canceled)

**6.** (amended) The headrest adjusting device (800) according to Claim 1, wherein the face direction detection means is provided on the vehicle (1000) and detects the position of the face based on the image of the space including the face of the occupant (70) taken by the image taking means and the direction of the face based on the detected position of the face and based on a position of a center of the face detected based on the detected position of the face.

**7.** The headrest adjusting device (800) according to Claim 1, wherein the headrest control means is provided at the headrest (200) and controls the position of the headrest (200) based on data obtained by a head portion detection means detecting a contact of a head portion of the occupant (70) of the vehicle with the headrest (200).

**8.** (canceled)

**9.** (amended) The headrest adjusting device (800) according to Claim 1, wherein the headrest control means controls the position and the angle of the headrest (200) based on a direction of the obstacle (900) detected by the obstacle detection means and based on a relative speed of the obstacle (900) with respect to the vehicle (1000).

**10.** The headrest adjusting device (800) according to Claim 1, wherein the headrest control means controls at least an up-down position and a front-rear position of the headrest (200) with respect to the vehicle when the obstacle (900) detected by the obstacle detection means is positioned in a rear area of the vehicle.

**11.** (amended) The headrest adjusting device (800) according to Claim 1, wherein the headrest control means controls at least the up-down position and the front-rear position of the headrest (200) with respect to the vehicle, and a rotation angle of the headrest (200) with respect to at least an axis of a left-right direction of the vehicle when the obstacle (900) detected by the obstacle detection means is positioned in a front area of the vehicle.

**12.** The headrest adjusting device (800) according to Claim 1, wherein the headrest control means controls the headrest (200) based on a direction of the collision with the obstacle (900) and the direction of the face in accordance with a predetermined sequence.

**13.** The headrest adjusting device (800) according to Claim 12, wherein the headrest control means obtains a movement amount of the headrest (200) in accordance with the sequence and moves the headrest (200) by the movement amount obtained in accordance with the sequence.

**14.** (amended) A headrest adjusting method comprising;
a face position detection step for detecting a position of a face of an occupant (70) of a vehicle (1000);
a face direction detection step for detecting a direction of the face of the occupant (70) of the vehicle (1000);
an obstacle detection step for detecting an obstacle (900) immediately before a collision with the vehicle (1000); and
a headrest control step for driving a headrest (200) of the vehicle (1000) and controlling a position and an angle of the headrest (200) based on the position of the face detected in the face position detection step and based on the direction of the face detected in the face direction detection step when the obstacle is detected in the obstacle detection step.

**15.** (amended) A computer program for allowing a computer to execute
a face position detection step for detecting a position of a face of an occupant (70) of a vehicle,
a face direction detection step for detecting a direction of the face of the occupant (70) of the vehicle,
an obstacle detection step for detecting an obstacle (900) immediately before a collision with the vehicle (1000), and
a headrest control step for driving a headrest (200) of the vehicle (1000) and controlling a position and an angle of the headrest (200) based on the position of the face detected in the face position detection step and based on the direction of the face detected in the face direction detection step when the obstacle is detected in the obstacle detection step.

**16.** (added) The headrest adjusting device (800) according to Claim 1, wherein the headrest (200) includes at least one actuator (211) and the headrest control means drives a predetermined actuator out of the at least one actuator (211) and controls the position and the angle of the headrest (200) based on the position of the face detected by the face position detection means and based on the direction of the face detected by the face direction detection means.

**17.** (added) The headrest adjusting device (800) according to Claim 16, wherein the obstacle detection means determines a relative speed between the obstacle and the vehicle (1000) and detects the obstacle, and wherein the headrest control means drives the predetermined actuator from among the actuators (211) and controls the position and the angle of the headrest (200) based on the relative speed detected by the obstacle detection means.

**18.** (added) The headrest adjusting device (800) according to Claim 7, wherein the head portion detection means includes a pressure detection means (299) detecting pressure applied to the headrest (200), and wherein the headrest control means controls the position and the angle of the headrest (200) when the pressure detection means detects pressure equal to or greater than a first pressure level.
